# EUROPEAN PATENT APPLICATION

(11) **EP 2 863 635 A1**
(43) Date of publication of application: **22.04.2015**
(21) Application number: 14157164.6
(22) Date of filing: 28.02.2014
(51) Int. Cl.: H04N 13/04, G02B 27/22

(54) **Glassless stereoscopic image display apparatus and method for operating the same**

(30) Priority: 17.10.2013 KR 20130124154
(71) Applicant: LG Electronics, Inc., Seoul 150-721 (KR)
(72) Inventor: Cho, Jaeyoung, 137-724 SEOUL (KR); Ko, Sieun, 137-724 SEOUL (KR)
(74) Representative: Cabinet Plasseraud

(57) **Abstract**

A glassless stereoscopic image display apparatus and a method for operating the same are disclosed. The glassless stereoscopic image display apparatus includes a display, a lens unit disposed in front of the display to separate multi-view images to be displayed on the display according to direction, and a controller configured to insert a first indicator indicating a sweet zone corresponding to a first viewing distance into a part of the multi-view images, insert a second indicator indicating a sweet zone corresponding to a second viewing distance into another part of the multi-view images, and control the display to display the multi-view images, into which the first and second indicators are inserted, on the display.

## Description

### CROSS-REFERENCE TO RELATED APPLICATION

This application claims the priority benefit of Korean Patent Application No. 10-2013-0124154, filed on October 17, 2013 in the Korean Intellectual Property Office, the disclosure of which is incorporated herein by reference.

### BACKGROUND OF THE INVENTION

### 1. Field of the invention

The present invention relates to a glassless stereoscopic image display apparatus and a method for operating the same, and more particularly to a glassless stereoscopic image display apparatus and a method for operating the same, by which user convenience is improved.

### 2. Description of the Related Art

An image display apparatus has a function of displaying images to a user. The user may see a variety of images on the image display apparatus.

Research has been continuously conducted into a stereoscopic image display apparatus to satisfy a variety of consumer demands. The stereoscopic image display apparatus may operate in a glass mode allowing perception of a stereoscopic image by wearing 3D glasses, or in a glassless mode allowing perception of a stereoscopic image without wearing 3D glasses.

In a glassless stereoscopic image display apparatus, a dead zone in which a stereoscopic image cannot be perceived may be generated due to movement of a user. As such, research is being conducted into various methods of eliminating dead zones.

### SUMMARY OF THE INVENTION

Therefore, the present invention has been made in view of the above problems, and it is an object of the present invention to provide a glassless stereoscopic image display apparatus and a method for operating the same, by which user convenience is improved.

In accordance with an aspect of the present invention, the above and other objects can be accomplished by the provision of a glassless stereoscopic image display apparatus, the apparatus including a display, a lens unit disposed in front of the display to separate multi-view images to be displayed on the display according to direction, and a controller configured to insert a first indicator indicating a sweet zone corresponding to a first viewing distance into a part of the multi-view images, insert a second indicator indicating a sweet zone corresponding to a second viewing distance into another part of the multi-view images, and control the display to display the multi-view images, into which the first and second indicators are inserted, on the display.

In accordance with a further aspect of the present invention, there is provided a method for operating a glassless stereoscopic image display apparatus, the method including receiving multi-view images, inserting a first indicator indicating a sweet zone corresponding to a first viewing distance into a part of the multi-view images, inserting a second indicator indicating a sweet zone corresponding to a second viewing distance into another part of the multi-view images, and displaying the multi-view images, into which the first and second indicators are inserted, on a display.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates the exterior of a glassless stereoscopic image display apparatus according to an embodiment of the present invention;
FIG. 2 illustrates a lens unit and a display spaced apart from each other in the glassless stereoscopic image display apparatus illustrated in FIG. 1;
FIG. 3 is a block diagram of the glassless stereoscopic image display apparatus illustrated in FIG. 1, according to an embodiment of the present invention;
FIG. 4 is a block diagram of a controller illustrated in FIG. 3, according to an embodiment of the present invention;
FIG. 5 illustrates a method for controlling a remote controller illustrated in FIG. 3, according to an embodiment of the present invention;
FIG. 6 is a block diagram of the remote controller illustrated in FIG. 3, according to an embodiment of the present invention;
FIG. 7 is a reference view for describing the operation principle of a glassless stereoscopic image display apparatus, according to an embodiment of the present invention;
FIG. 8A is a reference view for describing a sweet zone and a dead zone based on the position of a user, according to an embodiment of the present invention;
FIG. 8B illustrates that an indicator for guiding movement to a sweet zone is displayed in correspondence with the position of the user, according to an embodiment of the present invention;
FIG. 9 illustrates a viewable area based on the indicator scheme illustrated in FIG. 8B, according to an embodiment of the present invention;
FIG. 10 is a flowchart illustrating a method for operating a glassless stereoscopic image display apparatus, according to an embodiment of the present invention; and
FIGS. 11A to 16 are reference views for describing the method illustrated in FIG. 10.

### DETAILED DESCRIPTION OF THE PREFERRED EMBODIMENTS

Exemplary embodiments of the present invention will be described with reference to the attached drawings.

The terms "module" and "unit" used to signify components are used herein to help the understanding of the components and thus should not be construed as having specific meanings or functions. Accordingly, the terms "module" and "unit" may be used interchangeably.

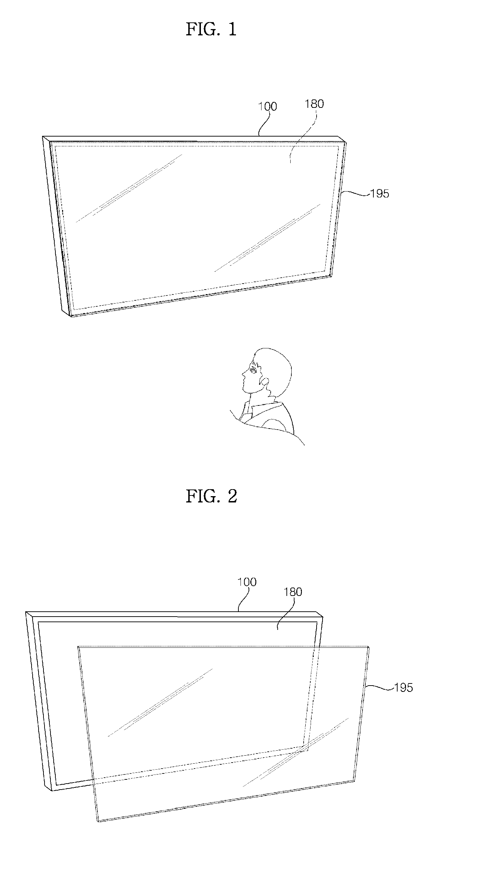

FIG. 1 illustrates the exterior of a glassless stereoscopic image display apparatus 100 in a glassless mode, according to an embodiment of the present invention, and FIG. 2 illustrates a lens unit 195 and a display 180 spaced apart from each other in the glassless stereoscopic image display apparatus 100 illustrated in FIG. 1.

Referring to FIGS. 1 and 2, the glassless stereoscopic image display apparatus 100 is an apparatus for displaying a stereoscopic image, i.e., a three-dimensional (3D) image. The glassless stereoscopic image display apparatus 100 is an apparatus for displaying a 3D image in a glassless mode.

To display a 3D image in a glassless mode, the glassless stereoscopic image display apparatus 100 may include the display 180 and the lens unit 195.

The display 180 may display an input image, and more particularly, a multi-view image. In detail, sub pixels for displaying the multi-view image may be arranged in a certain pattern.

The lens unit 195 may be spaced apart from the display 180 by a certain distance and face a user. The display 180 and the lens unit 195 are shown in FIG. 2 as spaced apart from each other.

The lens unit 195 may be configured to change the direction of light according to an applied power supply voltage. For example, if a plurality of viewers view a 2D image, a first power supply voltage may be applied to the lens unit 195 to emit light in the same direction as light emitted from the display 180. As such, the glassless stereoscopic image display apparatus 100 may provide the 2D image to the viewers.

Otherwise, if the viewers view a 3D image, a second power supply voltage may be applied to the lens unit 195, light emitted from the display 180 may be scattered, and thus the glassless stereoscopic image display apparatus 100 may provide 3D images to viewers.

The lens unit 195 may utilize a lenticular scheme using a lenticular lens, a parallax scheme using a slit array, and a microlens array scheme. The following description is given with respect to a lenticular scheme.

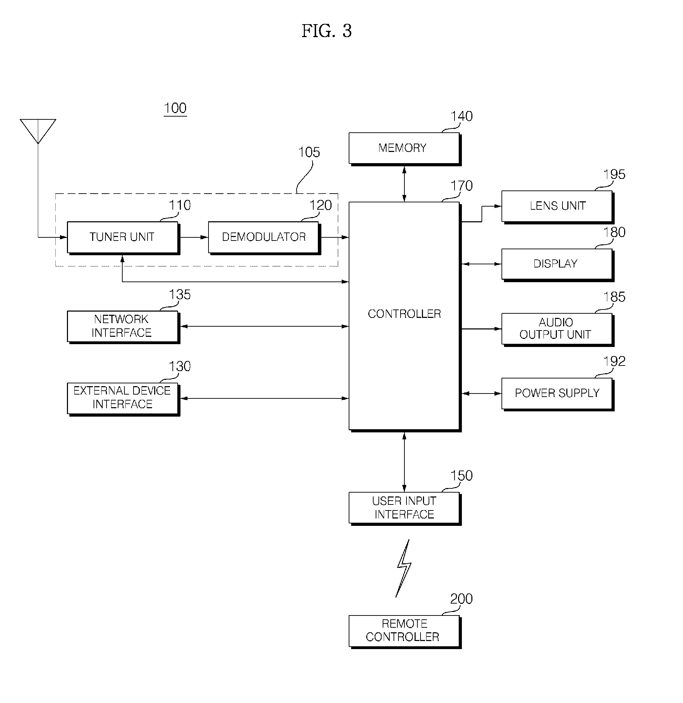

FIG. 3 is a block diagram of the glassless stereoscopic image display apparatus 100 illustrated in FIG. 1, according to an embodiment of the present invention.

Referring to FIG. 3, the glassless stereoscopic image display apparatus 100 may include a broadcast receiver 105, an external device interface 130, a memory 140, a user input interface 150, a sensor unit (not shown), a controller 170, the display 180, an audio output unit 185, a power supply 192, and the lens unit 195.

The broadcast receiver 105 may include a tuner unit 110, a demodulator 120, and a network interface 135. If necessary, the broadcast receiver 105 may be designed to include the tuner unit 110 and the demodulator 120 and not to include the network interface 135, or may be designed to include the network interface 135 and not to include the tuner unit 110 and the demodulator 120.

The tuner unit 110 selects a radio frequency (RF) broadcast signal corresponding to a channel selected by a user or each of all previously memorized channels among a plurality of RF broadcast signals received via an antenna. In addition, the tuner unit 110 converts the selected RF broadcast signal into an intermediate frequency (IF) signal or a baseband image/audio signal.

For example, if the selected RF broadcast signal is a digital broadcast signal, the tuner unit 110 converts the selected RF broadcast signal into a digital IF signal DIF. Otherwise, if the selected RF broadcast signal is an analog broadcast signal, the tuner unit 110 converts the selected RF broadcast signal into an analog baseband image/audio signal CVBS/SIF. That is, the tuner unit 110 may process digital broadcast signals or analog broadcast signals. The analog baseband image/audio signal CVBS/SIF may be directly input to the controller 170.

In addition, the tuner unit 110 may receive RF broadcast signals from an Advanced Television Systems Committee (ATSC) single-carrier system or from a Digital Video Broadcasting (DVB) multi-carrier system.

The tuner unit 110 may sequentially select RF broadcast signals corresponding to all broadcast channels previously memorized using a channel memory function among a plurality of RF signals received via an antenna, and convert the selected RF broadcast signals into IF signals or baseband image/audio signals.

The tuner unit 110 may include a plurality of tuners for receiving broadcast signals on a plurality of channels. Alternatively, the tuner unit 110 may be implemented as a single tuner for simultaneously receiving broadcast signals on a plurality of channels.

The demodulator 120 receives the digital IF signal DIF from the tuner unit 110 and demodulates the digital IF signal DIF.

The demodulator 120 may perform demodulation and channel decoding and then output a stream signal TS. In this case, the stream signal TS may be a signal obtained by multiplexing an image signal, an audio signal, and a data signal.

The stream signal TS output from the demodulator 120 may be input to the controller 170. The controller 170 performs demultiplexing, image/audio signal processing, etc. and then outputs processed image and audio signals to the display 180 and the audio output unit 185, respectively.

The external device interface 130 may transmit data to or receive data from an external device (not shown) connected to the glassless stereoscopic image display apparatus 100. For example, the external device interface 130 may include an audio/video (A/V) input/output (I/O) unit (not shown) or a wireless communication unit (not shown).

The external device interface 130 may be connected to an external device such as a digital versatile disc (DVD) player, a Blu-ray player, a game console, a camera, a camcorder, a computer (e.g., a laptop computer), or a set-top box, wirelessly or by wire for data transmission therebetween.

The A/V I/O unit may receive image signals and audio signals from the external device. The wireless communication unit may perform short-range wireless communication with other electronic devices.

The network interface 135 serves as an interface between the glassless stereoscopic image display apparatus 100 and a wired/wireless network such as the Internet. For example, the network interface 135 may receive content or data from the Internet, a content provider, or a network provider via the network.

The memory 140 may store various programs necessary for the controller 170 to process and control signals, and also store processed image signals, audio signals, and data signals.

In addition, the memory 140 may temporarily store image signals, audio signals, and data signals input via the external device interface 130. The memory 140 may store information about broadcast channels memorized using a channel memory function such as a channel map.

The memory 140 is separate from the controller 170 in FIG. 3, but embodiments of the present invention are not limited thereto. The memory 140 may be included in the controller 170.

The user input interface 150 transmits a signal received from the user to the controller 170 or transmits a signal received from the controller 170 to the user.

For example, the user input interface 150 may receive, from a remote controller 200, various user input signals such as a power-on/off signal, a channel selection signal, and a screen setting signal, transmit to the controller 170 user input signals received from local keys (not shown) such as a power key, a channel key, a volume key, and a setting key, and a sensor unit (not shown) for sensing a user gesture, or transmit to the sensor unit a signal received from the controller 170.

The controller 170 may demultiplex the stream signal TS input via the tuner unit 110, the demodulator 120, or the external device interface 130 into a plurality of signals and process the demultiplexed signals into signals for outputting an image and sound.

The image signal processed by the controller 170 may be input to the display 180 and be displayed as an image corresponding to the image signal. The image signal processed by the controller 170 may also be transmitted to an external output device via the external device interface 130.

The audio signal processed by the controller 170 may be output to the audio output unit 185. The audio signal processed by the controller 170 may also be transmitted to the external output device via the external device interface 130.

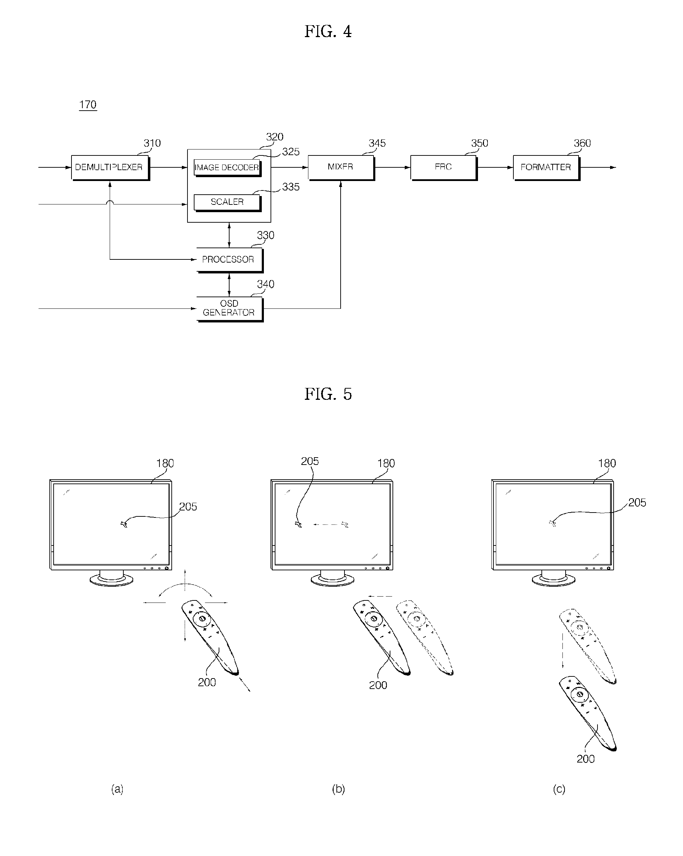

Although not shown in FIG. 3, the controller 170 may include a demultiplexer and an image processor. Descriptions thereof will be provided below with reference to FIG. 4.

In addition, the controller 170 may provide overall control to the glassless stereoscopic image display apparatus 100. For example, the controller 170 may control the tuner unit 110 to select (tune to) an RF broadcast signal corresponding to a user-selected channel or a previously memorized channel.

The controller 170 may control the glassless stereoscopic image display apparatus 100 according to a user command received via the user input interface 150 or an internal program.

The controller 170 may also control the display 180 to display an image. In this case, the image displayed on the display 180 may be a still image, video, or a 3D image.

The controller 170 may control a certain object in the image displayed on the display 180 to be rendered as a 3D object. For example, the certain object may be at least one of a linked web page (e.g. from a newspaper, a magazine, etc.), an electronic program guide (EPG), a menu, a widget, an icon, a still image, a video, and text.

This 3D object may be processed to have a different depth from the image displayed on the display 180. Preferably, the 3D object may appear to protrude relative to the image displayed on the display 180.

The controller 170 may control operation of the lens unit 195. For example, the controller 170 may control a first power supply voltage to be applied to the lens unit 195 to display a 2D image, or control a second power supply voltage to be applied to the lens unit 195 to display a 3D image. As such, when the 2D image is displayed, the lens unit 195 may emit light in the same direction as light emitted from the display 180. When the 3D image is displayed, the lens unit 195 may scatter the light emitted from the display 180.

The glassless stereoscopic image display apparatus 100 may further include a channel browsing processor (not shown) for generating thumbnail images corresponding to channel signals or external input signals. The channel browsing processor may generate the thumbnail images by receiving the stream signals TS output from the demodulator 120 or a stream signal output from the external device interface 130 and extracting images from the received stream signal. The generated thumbnail images may be stream-decoded together with a decoded image and then be input to the controller 170. The controller 170 may display the input thumbnail images as a thumbnail list on the display 180.

In this case, the thumbnail list may be displayed on a part of the display 180 while a certain image is being displayed, that is, in compact mode, or be displayed on the whole display 180, that is, in full screen mode. The thumbnail images of the thumbnail list may be updated sequentially.

The display 180 generates a drive signal by converting an image signal, a data signal, an on screen display (OSD) signal, or a control signal processed by the controller 170, or an image signal, a data signal, or a control signal received from the external device interface 130.

The display 180 may be a plasma display panel (PDP), a liquid crystal display (LCD), an organic light-emitting diode (OLED), a flexible display, etc. The display 180 may also be a 3D display.

As described above, the display 180 is a display for displaying a 3D image in a glassless mode without using 3D glasses. To display a 3D image in a glassless mode, the lens unit 195 utilizing the lenticular scheme is provided.

The power supply 192 supplies power to the glassless stereoscopic image display apparatus 100 to operate each module or unit of the glassless stereoscopic image display apparatus 100.

The display 180 may be configured to include a 2D image area and a 3D image area. In this case, the power supply 192 may supply different first and second power supply voltages to the lens unit 195. The first and second power supply voltages may be applied under the control of the controller 170.

The lens unit 195 changes the direction of light according to an applied power supply voltage.

The first power supply voltage may be applied to a first area of the lens unit 195 corresponding to the 2D image area of the display 180 such that light is emitted in the same direction as light emitted from the 2D image area of the display 180. As such, the user may perceive a displayed 2D image as it is.

The second power supply voltage may be applied to a second area of the lens unit 195 corresponding to the 3D image area of the display 180 such that light emitted from the 3D image area of the display 180 is scattered. Due to a 3D effect resulting from the scattered light, the user may perceive a displayed 3D image as a stereoscopic image without wearing glasses.

The lens unit 195 may be spaced apart from the display 180 and be disposed toward the user. Particularly, the lens unit 195 may be parallel to or tilted by a certain angle with respect to the display 180. The lens unit 195 may be concave or convex. The lens unit 195 may have a form of a sheet. As such, the lens unit 195 may be referred to as a lens sheet.

The display 180 may also be a touch screen used as not only an output device but also an input device.

The audio output unit 185 receives the processed audio signal from the controller 170 and outputs the received audio signal as sound.

The remote controller 200 transmits a user input to the user input interface 150. To transmit the user input, the remote controller 200 may operate based on various communication standards such as Bluetooth, RF, infrared (IR), Ultra WideBand (UWB), and ZigBee. In addition, the remote controller 200 may receive an image signal, an audio signal, or a data signal output from the user input interface 150 and output the received signal as an image or sound.

The above-described stereoscopic image display apparatus 100 may be a stationary or mobile digital broadcast receiver.

In this specification, the glassless stereoscopic image display apparatus 100 may include a TV receiver, a monitor, a mobile phone, a smart phone, a laptop computer, a digital broadcast terminal, a personal digital assistant (PDA), a portable multimedia player (PMP), etc.

The block diagram of the glassless stereoscopic image display apparatus 100 in FIG. 3 is an exemplary embodiment of the present invention. The components illustrated in the block diagram may be integrated, omitted, or supplemented with new components according to actual implementation of the glassless stereoscopic image display apparatus 100. That is, if necessary, two or more components may be integrated into a single component or a single component may be subdivided into two or more components. In addition, the functions of the components are exemplarily given, and the functions or the components should not be construed as limiting embodiments of the present invention.

Unlike the illustration of FIG. 3, the glassless stereoscopic image display apparatus 100 may be configured not to include the tuner unit 110 and the demodulator 120 and to receive and reproduce image content via the network interface 135 or the external device interface 130.

The glassless stereoscopic image display apparatus 100 is an example of an image signal processing apparatus that processes a stored image or an input image. Other examples of the image signal processing apparatus include a set-top box not including the display 180 and the audio output unit 185 illustrated in FIG. 3, a DVD player, a Blu-ray player, a game console, and a computer.

FIG. 4 is a block diagram of the controller 170 illustrated in FIG. 3, according to an embodiment of the present invention.

Referring to FIG. 4, the controller 170 may include a demultiplexer 310, an image processor 320, a processor 330, an OSD generator 340, a mixer 345, a frame rate converter (FRC) 350, and a formatter 360. The controller 170 may further include an audio processor (not shown) and a data processor (not shown).

The demultiplexer 310 demultiplexes an input stream signal. For example, the demultiplexer 310 may demultiplex an MPEG-2 TS into an image signal, an audio signal, and a data signal. Here, the input stream signal may be a stream signal output from the tuner unit 110, the demodulator 120, or the external device interface 130.

The image processor 320 may process the demultiplexed image signal. To process the image signal, the image processor 320 may include an image decoder 325 and a scaler 335.

The image decoder 325 decodes the demultiplexed image signal and the scaler 335 scales the resolution of the decoded image signal so that the image signal is displayable on the display 180.

The image decoder 325 may include various types of decoders.

The decoded image signal processed by the image processor 320 may be a 2D image signal, a 3D image signal, or a combination thereof.

For example, an external image signal input from an external device (not shown) or an image signal included in a broadcast signal received from the tuner unit 110 may be a 2D signal, a 3D signal, or a combination thereof. As such, the controller 170 may control the image processor 320 to process the image signal and output a 2D image signal, a 3D image signal, or a combination thereof.

The decoded image signal processed by the image processor 320 may be a 3D image signal in various formats. For example, the decoded image signal may be a 3D image signal including a color image and a depth image, or a 3D image signal including a multi-view image signal. The multi-view image signal may include, for example, a left-view image signal and a right-view image signal.

The processor 330 may provide overall control to the glassless stereoscopic image display apparatus 100 or the controller 170. For example, the processor 330 may control the tuner unit 110 to select (be tuned to) an RF broadcast signal corresponding to a user-selected channel or a previously memorized channel.

The processor 330 may also control the glassless stereoscopic image display apparatus 100 according to a user command received via the user input interface 150 or an internal program.

The processor 330 may control data transmission via the network interface 135 or the external device interface 130.

The processor 330 may control operations of the demultiplexer 310, the image processor 320, and the OSD generator 340 in the controller 170.

The OSD generator 340 generates an OSD signal autonomously or according to a user input. For example, the OSD generator 340 may generate signals for displaying various types of information as graphics or text on the display 180, according to user input signals. The generated OSD signal may include various types of data such as a user interface (UI), various menus, widgets, icons, etc. The OSD signal may also include a 2D object and/or a 3D object.

In addition, the OSD generator 340 may generate a pointer to be displayed on the display 180 based on a pointing signal input from the remote controller 200. In particular, the pointer may be generated by a pointing signal processor (not shown) which may be included in the OSD generator 240. Alternatively, the pointing signal processor may be separate from the OSD generator 240.

The mixer 345 may mix the OSD signal generated by the OSD generator 340 with the decoded image signal processed by the image processor 320. In this case, each of the OSD signal and the decoded image signal may include at least one of a 2D signal or a 3D signal. The mixed image signal is provided to the FRC 350.

The FRC 350 may convert the frame rate of the mixed image signal. Alternatively, the FRC 350 may simply output the mixed image signal without converting the frame rate thereof.

The formatter 360 may arrange left-view and right-view images of the frame rate-converted 3D image.

The formatter 360 may separate a 2D image signal and a 3D image signal from the mixed image signal of the OSD signal and the decoded image signal received from the mixer 345.

In the present specification, a 3D image signal refers to a signal including a 3D object such as a picture-in-picture (PIP) image (a still image or video), an EPG for providing broadcast program information, a menu, a widget, an icon, text, an object within an image, a person, a background, or a web page (e.g. from a newspaper, a magazine, etc.).

The formatter 360 may change the format of the 3D image signal. For example, upon receipt of a 3D image in one of the above-described 3D formats, the formatter 360 may convert the received 3D image into multi-view images, particularly in such a manner that the multi-view images are repeated. As such, the 3D image may be displayed in a glassless mode.

The formatter 360 may convert a 2D image signal into a 3D image signal. For example, the formatter 360 may detect edges or a selectable object from the 2D image signal and may generate an object based on the detected edges or the selectable object as a 3D image signal according to a 3D image generation algorithm. In this case, as described above, the generated 3D image signal may be a multi-view image signal.

A 3D processor (not shown) for processing an image signal to have a 3D effect may be further provided after the formatter 360. For enhancing the 3D effect, the 3D processor may adjust the brightness, tint, and color of the image signal.

The audio processor (not shown) of the controller 170 may process the demultiplexed audio signal. To process the audio signal, the audio processor may include various decoders.

The audio processor of the controller 170 may also adjust the bass, treble, and volume of the audio signal.

The data processor (not shown) of the controller 170 may process the demultiplexed data signal. For example, if the demultiplexed data signal is a coded data signal, the data processor may decode the coded data signal. The coded data signal may be an EPG which includes broadcast information such as start times, end times, etc. of programs to be broadcast on every channel.

The mixer 345 mixes signals received from the OSD generator 340 and the image processor 320 and then the formatter 360 performs 3D processing on the mixed signal in FIG. 4. However, embodiments of the present invention are not limited thereto and the mixer 345 may be disposed after the formatter 360. That is, the formatter 360 may perform 3D processing on a signal output from the image processor 320, the OSD generator 340 may generate an OSD signal and perform 3D processing on the OSD signal, and then the mixer 345 may mix the processed 3D signals.

The block diagram of the controller 170 illustrated in FIG. 4 is an exemplary embodiment of the present invention. The components illustrated in the block diagram may be integrated, omitted, or supplemented with new components according to actual implementation of the controller 170.

In particular, the FRC 350 and the formatter 360 may be separate from the controller 170.

FIG. 5 illustrates a method for controlling the remote controller 200 illustrated in FIG. 3, according to an embodiment of the present invention.

FIG. 5(a) illustrates that a pointer 205 indicating the remote controller 200 is displayed on the display 180.

A user may move or rotate the remote controller 200 upward, downward, leftward, or rightward (FIG. 5(b)), or forward or backward (FIG. 5(c)). Since the pointer 205 displayed on the display 180 of the glassless stereoscopic image display apparatus 100 moves to correspond to the motion of the remote controller 200. Since the pointer 205 moves along the remote controller 200 in a 3D space as illustrated in FIG. 5, this remote controller 200 may be referred to as a space remote controller.

FIG. 5(b) illustrates that, if the user moves the remote controller 200 leftward, the pointer 205 also moves leftward on the display 180 to correspond to the motion of the remote controller 200.

Information about the motion of the remote controller 200, which is sensed by a sensor of the remote controller 200, is transmitted to the glassless stereoscopic image display apparatus 100. The glassless stereoscopic image display apparatus 100 may calculate coordinates of the pointer 205 based on the information about the motion of the remote controller 200, and display the pointer 205 to correspond to the calculated coordinates.

FIG. 5(c) illustrates that the user moves the remote controller 200 away from the display 180 while pressing a certain button of the remote controller 200. As such, a selected area corresponding to the pointer 205 on the display 180 may be zoomed in and thus enlarged. Otherwise, if the user moves the remote controller 200 toward the displ ay 180, the selection area corresponding to the pointer 205 on the display 180 is zoomed out and thus contracted. Alternatively, the selection area may be zoomed out if the remote controller 200 moves away from the display 180, and may be zoomed in if the remote controller 200 approaches the display 180.

While the certain button of the remote controller 200 is being pressed, upward, downward, leftward, and rightward motions may be ignored. That is, when the remote controller 200 moves away from or approaches the display 180, upward, downward, leftward, and rightward motions are not sensed and only forward and backward motions are sensed. While the certain button of the remote controller 200 is not being pressed, only the pointer 205 moves to correspond to upward, downward, leftward, and rightward motions of the remote controller 200.

The speed and direction of the pointer 205 may correspond to the speed and direction of the remote controller 200.

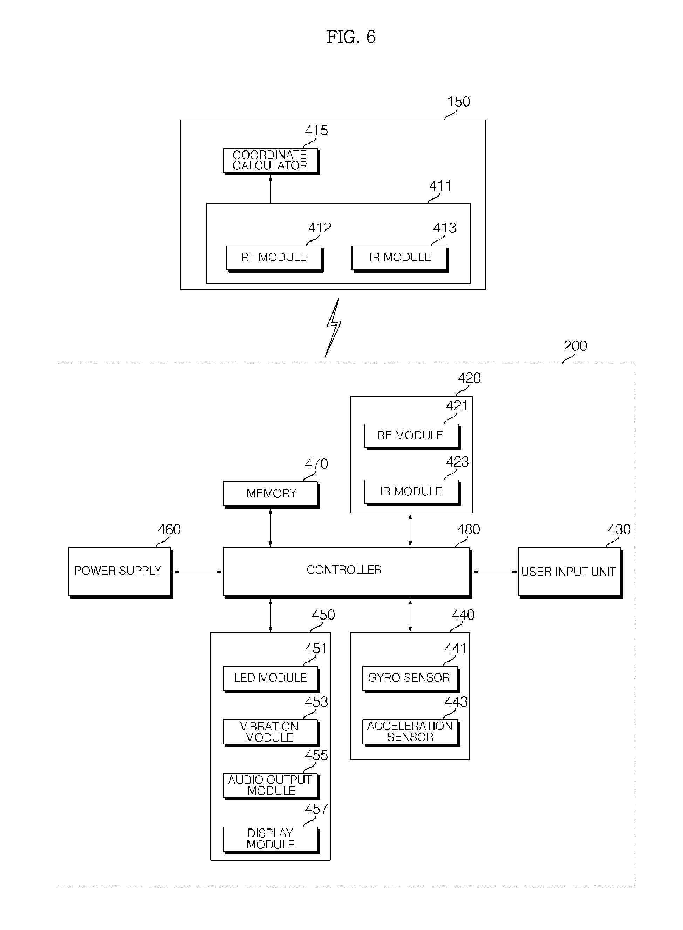

FIG. 6 is a block diagram of the remote controller 200 illustrated in FIG. 3, according to an embodiment of the present invention.

Referring to FIG. 6, the remote controller 200 may include a wireless communication unit 420, a user input unit 430, a sensor unit 440, an output unit 450, a power supply 460, a memory 470, and a controller 480.

The wireless communication unit 420 may transmit signals to and receive signals from the glassless stereoscopic image display apparatus 100.

In the current embodiment, the wireless communication unit 420 may include an RF module 421 for transmitting signals to and receiving signals from the glassless stereoscopic image display apparatus 100 according to the RF communication standard. The wireless communication unit 420 may also include an IR module 423 for transmitting signals to and receiving signals from the glassless stereoscopic image display apparatus 100 according to the IR communication standard.

The remote controller 200 transmits a signal including information about motion of the remote controller 200 to the glassless stereoscopic image display apparatus 100 via the RF module 421.

In addition, the remote controller 200 may receive a signal from the glassless stereoscopic image display apparatus 100 via the RF module 421. If necessary, the remote controller 200 may transmit a command such as a power on/off command, a channel switching command, or a volume change command to the glassless stereoscopic image display apparatus 100 via the IR module 423.

The user input unit 430 may include a keypad, buttons, or a touch screen. A user may input a command to the glassless stereoscopic image display apparatus 100 by manipulating the user input unit 430 of the remote controller 200. If the user input unit 430 includes hard-key buttons, the user may input a command to the glassless stereoscopic image display apparatus 100 by pressing the hard-key buttons. Otherwise, if the user input unit 430 includes a touch screen displaying soft keys, the user may input a command to the glassless stereoscopic image display apparatus 100 by touching the soft keys. The user input unit 430 may also include various input tools such as a scroll key and a jog key, which should not be construed as limiting embodiments of the present invention.

The sensor unit 440 may include a gyro sensor 441 and an acceleration sensor 443. The gyro sensor 441 may sense the motion of the remote controller 200.

For example, the gyro sensor 441 may sense the motion of the remote controller 200 in x, y, and z directions. The acceleration sensor 443 may sense the speed of the remote controller 200. The sensor unit 440 may further include a distance sensor for sensing the distance between the remote controller 200 and the display 180.

The output unit 450 may output an image or audio signal corresponding to the manipulation of the user input unit 430 or a signal transmitted from the glassless stereoscopic image display apparatus 100. As such, the output unit 450 allows the user to determine whether the user input unit 430 has been manipulated or whether the glassless stereoscopic image display apparatus 100 has been controlled.

For example, the output unit 450 may include a light emitting diode (LED) module 451 to be turned on or off when the user input unit 430 is manipulated or when a signal is transmitted to or received from the glassless stereoscopic image display apparatus 100 via the wireless communication unit 420, a vibration module 453 for generating vibrations, an audio output module 455 for outputting sound, and a display module 457 for outputting an image.

The power supply 460 supplies power to the remote controller 200. If the remote controller 200 does not move for a certain time, the power supply 460 may cut off power supply to the remote controller 200 to save power. The power supply 460 may resume power supply if a certain key on the remote controller 200 is manipulated.

The memory 470 may store various types of programs or application data for controlling or operating the remote controller 200. The remote controller 200 may wirelessly transmit signals to and receive signals from the glassless stereoscopic image display apparatus 100 in a certain frequency band via the RF module 421. The controller 480 of the remote controller 200 may store, in the memory 470, information about the frequency band used to wirelessly transmit and receive signals between the paired stereoscopic image display apparatus 100 and the remote controller 200, and then refer to the information later.

The controller 480 provides overall control to the remote controller 200. The controller 480 may transmit a signal corresponding to manipulation of a certain key of the user input unit 430 or a signal corresponding to motion of the remote controller 200, which is sensed by the sensor unit 440, to the glassless stereoscopic image display apparatus 100 via the wireless communication unit 420.

The user input interface 150 of the glassless stereoscopic image display apparatus 100 may include a wireless communication unit 411 for wirelessly transmitting signals to and receiving signals from the remote controller 200, and a coordinate calculator 415 for calculating coordinates corresponding to motion of the remote controller 200.

The user input interface 150 may wirelessly transmit signals to and receive signals from the remote controller 200 via an RF module 412. In addition, the user input interface 150 may wirelessly receive signals transmitted from the remote controller 200 according to the IR communication standard, via an IR module 413.

The coordinate calculator 415 may calculate coordinates (x, y) of the pointer 205 to be displayed on the display 180 by correcting an error such as image vibration in the signal including the information about the motion of the remote controller 200, which is received via the wireless communication unit 411.

A signal transmitted from the remote controller 200 to the glassless stereoscopic image display apparatus 100 via the user input interface 150 is received by the controller 170 of the glassless stereoscopic image display apparatus 100. The controller 170 may acquire information about the motion of the remote controller 200 and information about manipulation of a key from the signal transmitted from the remote controller 200, and control the glassless stereoscopic image display apparatus 100 based on the acquired information.

Alternatively, the remote controller 200 may calculate the coordinates of the pointer 205 to correspond to the motion of the remote controller 200 and output the coordinates to the user input interface 150 of the glassless stereoscopic image display apparatus 100. In this case, the user input interface 150 may transmit, to the controller 170, information about the received coordinates of the pointer 205, which are not corrected for an error such as image vibration.

Alternatively, unlike the illustration of FIG. 6, the coordinate calculator 415 may be included in the controller 170 instead of the user input interface 150.

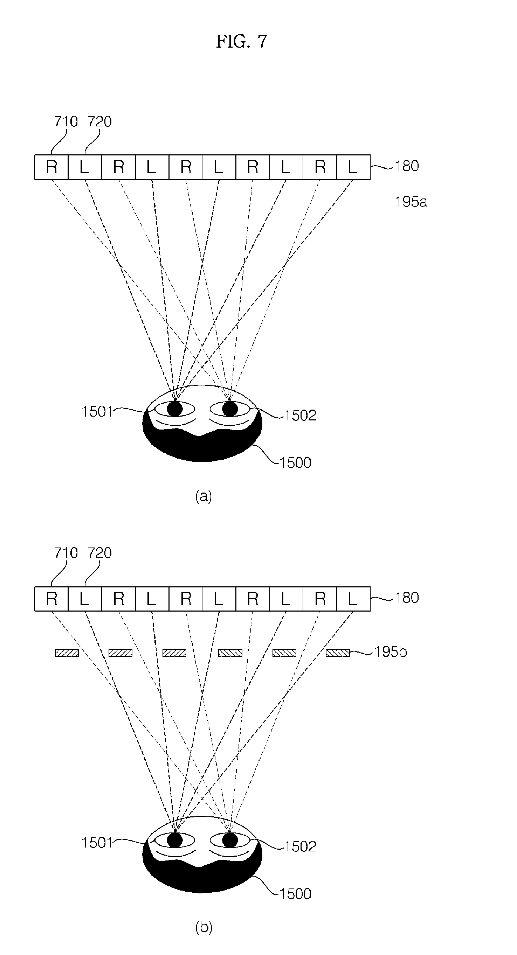

FIG. 7 is a reference view for describing the operation principle of a glassless stereoscopic image display apparatus, according to an embodiment of the present invention.

As described above, a glassless stereoscopic image display apparatus may utilize a lenticular scheme, a parallax scheme, or a microlens array scheme. The lenticular scheme and the parallax scheme will now be described in detail. In addition, a multi-view image including two view images such as a left-view image and a right-view image is exemplarily given in the following description, and should not be construed as limiting embodiments of the present invention.

FIG. 7(a) illustrates the lenticular scheme using a lenticular lens. Referring to FIG. 7(a), blocks 720 (L) forming a left-view image and blocks 710 (R) forming a right-view image may be alternately arranged on the display 180. In this case, each block may include a plurality of pixels, or may include a single pixel. It is assumed herein that each block includes a single pixel.

In the lenticular scheme, a lenticular lens 195a is provided in the lens unit 195. The lenticular lens 195a disposed in front of the display 180 may change the direction of light emitted from the pixels 710 and 720. For example, the direction of light emitted from the pixels 720 (L) forming the left-view image may be changed to be directed toward the left eye 1501 of a user 1500, and the direction of light emitted from the pixels 710 (R) forming the right-view image may be changed to be directed toward the right eye 1502 of the user 1500.

Thus, as the light emitted from the pixels 720 (L) forming the left-view image is combined, the user 1500 sees the left-view image with the left eye 1501. In addition, as the light emitted from the pixels 710 (R) forming the right-view image is combined, the user 1500 sees the right-view image with the right eye 1502. Consequently, the user 1500 can perceive a stereoscopic image without wearing 3D glasses.

FIG. 7(b) illustrates the parallax scheme using a slit array. Referring to FIG. 7(b), the blocks 720 (L) forming the left-view image and the blocks 710 (R) forming the right-view image may be alternatively arranged on the display 180, as in FIG. 7(a). In the parallax scheme, a slit array 195b is provided in the lens unit 195. The slit array lens 195b serves as a barrier, thus steering light emitted from the pixels in a certain direction. Therefore, the user 1500 sees the left-view image with the left eye 1501 and the right-view image with the right eye 1502, like the lenticular scheme. Consequently, the user 1500 can perceive a stereoscopic image without wearing 3D glasses.

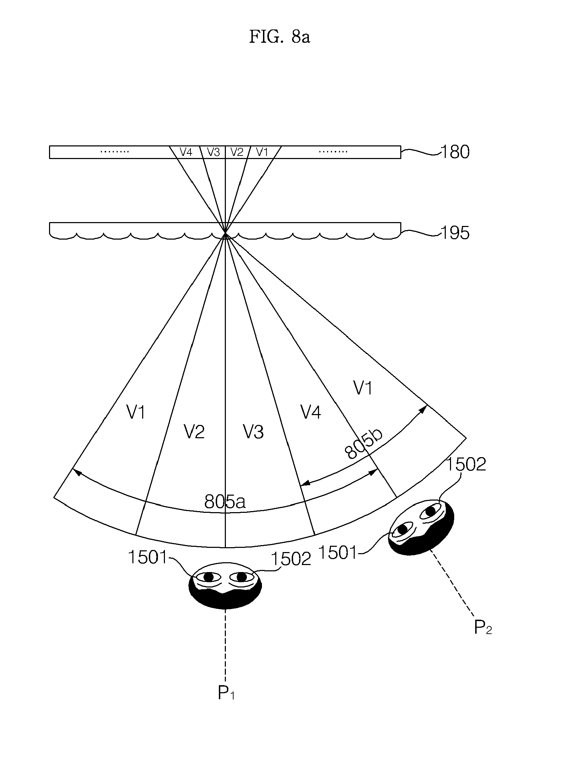

FIG. 8A is a reference view for describing a sweet zone and a dead zone based on the position of the user 1500, according to an embodiment of the present invention.

Referring to FIG. 8A, multi-view images, e.g., first to fourth view images V1 to V4, may be displayed on the display 180 of the glassless stereoscopic image display apparatus 100. Each of the displayed first to fourth view images V1 to V4 is changed in direction by the lens unit 195 and is output toward the user 1500.

That is, as illustrated in FIG. 8A, if the fourth to first view images V4 to V1 are sequentially displayed from left to right on the display 180, due to the lens unit 195, the user 1500 may sequentially see the first to fourth view images V1 to V4 from left to right.

If the first view image V1 is incident upon the left eye of the user 1500 and the second view image V2 is incident upon the right eye of the user 1500, the user 1500 may not appropriately perceive a stereoscopic image. In this manner, if the second view image V2 is incident upon the left eye and the third view image V3 is incident upon the right eye, or if the third view image V3 is incident upon the left eye and the fourth view image V4 is incident upon the right eye, the user 1500 may not appropriately perceive a stereoscopic image.

If the fourth view image V4 is incident upon the left eye and the first view image V1 is incident upon the right eye, since a view reversal phenomenon occurs between the left eye and the right eye, the user 1500 may not appropriately perceive a stereoscopic image.

In order to prevent the above problem, a disparity may be gradually increased from the first view image V1 to the fourth view image V4.

FIG. 8A illustrates a sweet zone 805a where the user 1500 may appropriately perceive a stereoscopic image, and a dead zone 805b where the user 1500 may not appropriately perceive a stereoscopic image.

That is, the sweet zone 805a may include view areas corresponding to the displayed first to fourth view images V1 to V4, and the dead zone 805b may include only view areas corresponding to the fourth and first view images V4 and V1.

Eventually, as illustrated in FIG. 8A, if the user 1500 is at a first position P₁, the user 1500 may see the second view image V2 and the third view image V3 respectively with the left eye 1501 and the right eye 1502, and thus may appropriately perceive a stereoscopic image. Otherwise, if the user 1500 is at a second position P₂, the user 1500 may see the fourth view image V4 and the first view image V1 respectively with the left eye 1501 and the right eye 1502, and thus may not appropriately perceive a stereoscopic image.

In order to prevent a dead zone phenomenon due to movement of the user 1500, according to an indicator scheme, an indicator for guiding movement to a sweet zone may be inserted into multi-view images.

In this specification, the indicator scheme is described as a solution to the dead zone phenomenon.

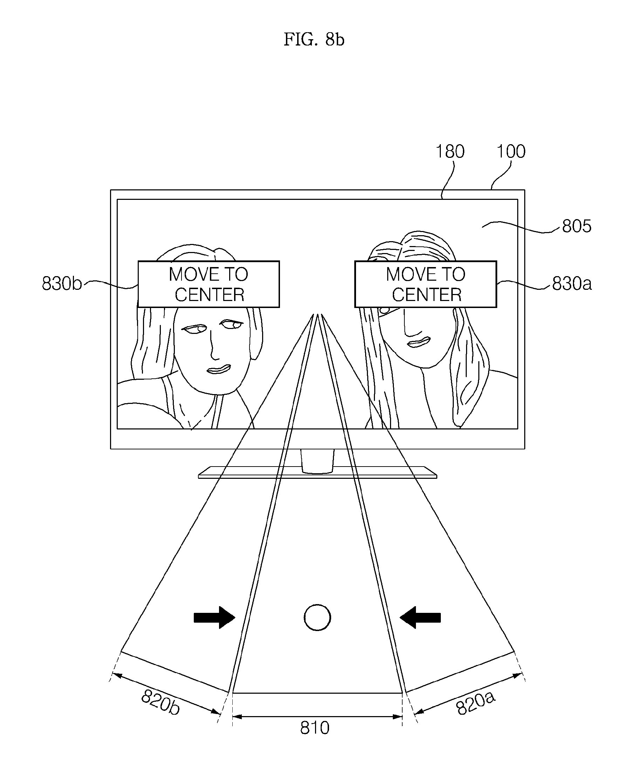

FIG. 8B illustrates that an indicator for guiding movement to a sweet zone is displayed in correspondence with the position of the user 1500, according to an embodiment of the present invention.

Referring to FIG. 8B, if a certain image 805 is displayed on the display 180 of the glassless stereoscopic image display apparatus 100 in a glassless mode, a sweet zone 810 allowing appropriate perception of a stereoscopic image and dead zones 820a and 820b not allowing appropriate perception of a stereoscopic image may be formed.

As illustrated in FIG. 8B, if the user 1500 is positioned in the sweet zone 810, no indicator may be visible. However, if the user 1500 is positioned in the dead zone 820a or 820b, an indicator 830a or 830b for guiding movement to a central area may be visible. As such, the user 1500 may move to the central area with respect to the glassless stereoscopic image display apparatus 100

The indicator scheme illustrated in FIG. 8B guides the user 1500 only not to be positioned in side areas of the glassless stereoscopic image display apparatus 100, that is, to be positioned in the central area, regardless of the distance between the user 1500 and the glassless stereoscopic image display apparatus 100.

However, the above-described indicator scheme is appropriate only when the user 1500 is positioned at an optimum viewing distance from the glassless stereoscopic image display apparatus 100, and may not be appropriate when the user 1500 is not positioned at the optimum viewing distance.

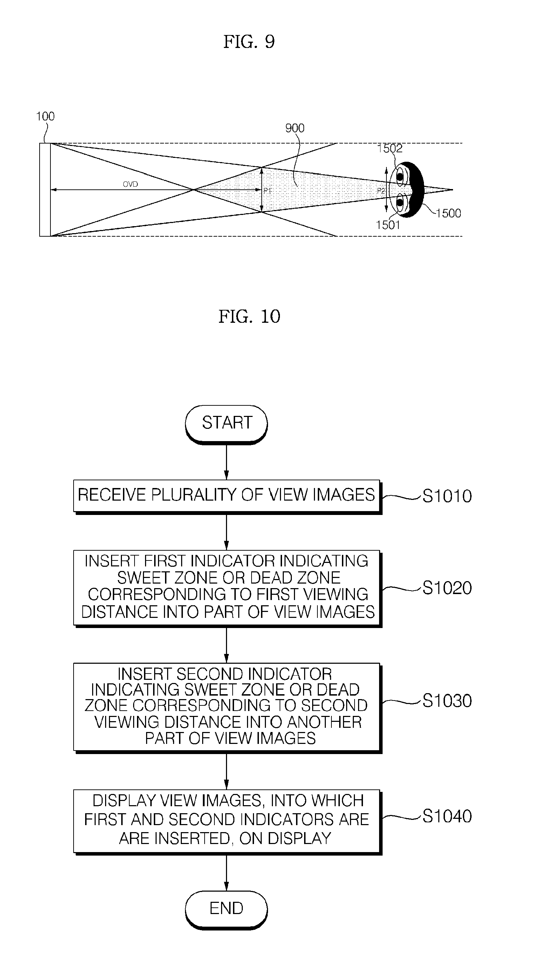

FIG. 9 illustrates a viewable area 900 based on the indicator scheme illustrated in FIG. 8B, according to an embodiment of the present invention.

Referring to FIG. 9, the viewable area 900 based on an optimum viewing distance OVD from the glassless stereoscopic image display apparatus 100 may be defined in a diamond shape. In the viewable area 900, a width p1 is the greatest at the optimum viewing distance OVD.

As illustrated in FIG. 9, if the user 1500 is not positioned at the optimum viewing distance OVD but is positioned at a distance greater than OVD, since a width p2 of the viewable area 900 is small, the user 1500 may see different reversed view images with the left eye 1501 and the right eye 1502.

That is, although the user 1500 is positioned at the central area, the user 1500 may be positioned in a dead zone.

In the present invention, in order to solve this problem, indicators respectively corresponding to a plurality of viewing distances may be inserted into multi-view images. A detailed description thereof will now be given with reference to FIG. 10.

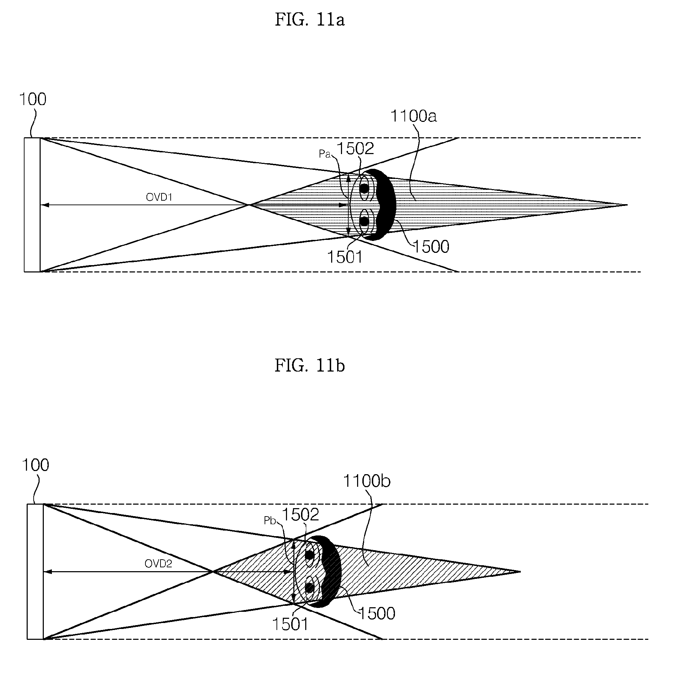

FIG. 10 is a flowchart illustrating a method for operating a glassless stereoscopic image display apparatus, according to an embodiment of the present invention, and FIGS. 11A to 16 are reference views for describing the method illustrated in FIG. 10.

Initially, the controller 170 of the glassless stereoscopic image display apparatus 100 receives multi-view images (S1010).

The multi-view images input to the controller 170 may be received from the outside of the glassless stereoscopic image display apparatus 100. Alternatively, the multi-view images may be generated from inside the glassless stereoscopic image display apparatus 100.

The formatter 360 of the controller 170 of the glassless stereoscopic image display apparatus 100 may convert an input image into multi-view images. The multi-view images may be of various types, for example, broadcast images or movie images.

Then, the controller 170 of the glassless stereoscopic image display apparatus 100 inserts a first indicator corresponding to a first viewing distance into a part of the multi-view images (S1020), and inserts a second indicator corresponding to a second viewing distance into another part of the multi-view images (S1030). The display 180 displays the multi-view images into which the first and second indicators are inserted (S1040).

For example, the controller 170 may insert the first indicator indicating a first sweet zone in correspondence with the first viewing distance into a part of the multi-view images, and may insert the second indicator indicating a second sweet zone in correspondence with the second viewing distance into another part of the multi-view images.

In this case, the first and second indicators may be the same in shape and color, or may be different from each other in at least one of brightness, color, and shape.

FIG. 11A illustrates a first sweet zone 1100a corresponding to a first viewing distance OVD1, and FIG. 11B illustrates a second sweet zone 1100b corresponding to a second viewing distance OVD2.

As noted in FIGS. 11A and 11B, the second viewing distance OVD2 is less than the first viewing distance OVD1.

The first sweet zone 1100a corresponding to the first viewing distance OVD1 may have a diamond shape having a width Pa corresponding to the first viewing distance OVD1 while the second sweet zone 1100b corresponding to the second viewing distance OVD2 may have a diamond shape having a width Pb corresponding to the second viewing distance OVD2.

Using the above difference between the first and second sweet zones 1100a and 1100b, the present invention proposes a scheme allowing the user 1500 to perceive an accurate sweet zone in consideration of the distance between the user 1500 and the glassless stereoscopic image display apparatus 100.

In addition, using a first dead zone and a second dead zone, the present invention also proposes a scheme allowing the user 1500 to perceive an accurate dead zone in consideration of the distance between the user 1500 and the glassless stereoscopic image display apparatus 100.

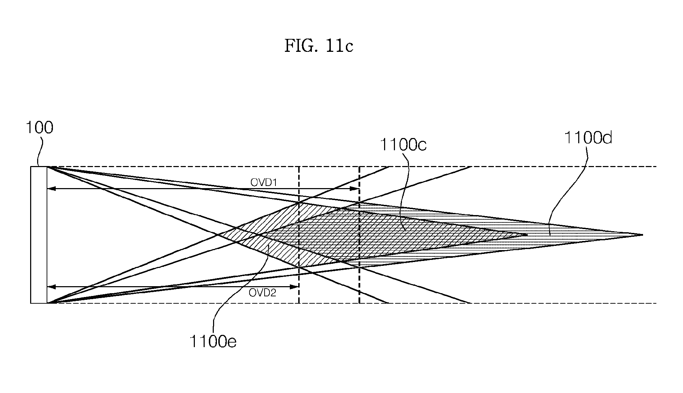

FIG. 11C illustrates a common sweet zone 1100c between the first sweet zone 1100a of FIG. 11A and the second sweet zone 1100b of FIG. 11B.

In the present invention, a first indicator corresponding to the first viewing distance OVD1 and the first sweet zone 1100a may be inserted into multi-view images to allow perception of the first sweet zone 1100a, and a second indicator corresponding to the second viewing distance OVD2 and the second sweet zone 1100b may be inserted into the multi-view images to allow perception of the second sweet zone 1100b. In this case, the first and second indicators may be different from each other in at least one of brightness, color, and shape.

In the following description, it is assumed that the first indicator corresponding to the first sweet zone 1100a is a green indicator, and the second indicator corresponding to the second sweet zone 1100b is a blue indicator.

Optionally, a third indicator corresponding to a first dead zone other than the first sweet zone 1100a may be inserted into the multi-view images to allow perception of the first dead zone, and a fourth indicator corresponding to a second dead zone other than the second sweet zone 1100b may be inserted into the multi-view images to allow perception of the second dead zone. In this case, the third and fourth indicators may be the same in at least one of brightness, color, and shape. In the following description, it is assumed that the third and fourth indicators are the same indicator, e.g., a red indicator.

As such, if the user 1500 is positioned in the common sweet zone 1100c of the first sweet zone 1100a corresponding to the first viewing distance OVD1, the user 1500 may see a green indicator and a blue indicator at the same time. Since the common sweet zone 1100c has a diamond shape, the common sweet zone 1100c may be easily perceived in consideration of the distance between the user 1500 and the glassless stereoscopic image display apparatus 100. Eventually, the user 1500 may stably see a stereoscopic image in the common sweet zone 1100c without experiencing a view reversal phenomenon.

Otherwise, if the user 1500 is positioned in an area 1100d of the first sweet zone 1100a other than the common sweet zone 1100c, the user 1500 may see the green indicator related to the first sweet zone 1100a and the red indicator related to the second dead zone at the same time. As such, unlike FIG. 9, the user 1500 may perceive an expanded dead zone.

If the user 1500 is positioned in an area 1100e of the second sweet zone 1100b other than the common sweet zone 1100c, the user 1500 may see the blue indicator related to the second sweet zone 1100b and the red indicator related to the first dead zone at the same time. As such, unlike FIG. 9, the user 1500 may perceive the expanded dead zone.

If the user 1500 is positioned in an area other than the first and second sweet zones 1100a and 1100b, the user 1500 may see the red indicator.

Eventually, compared to FIG. 9, based on the scheme illustrated in FIGS. 11A to 11C, due to the first and second indicators, the common sweet zone 1100c may be accurately perceived. In addition, due to the third and fourth indicators, the expanded dead zone may be accurately perceived.

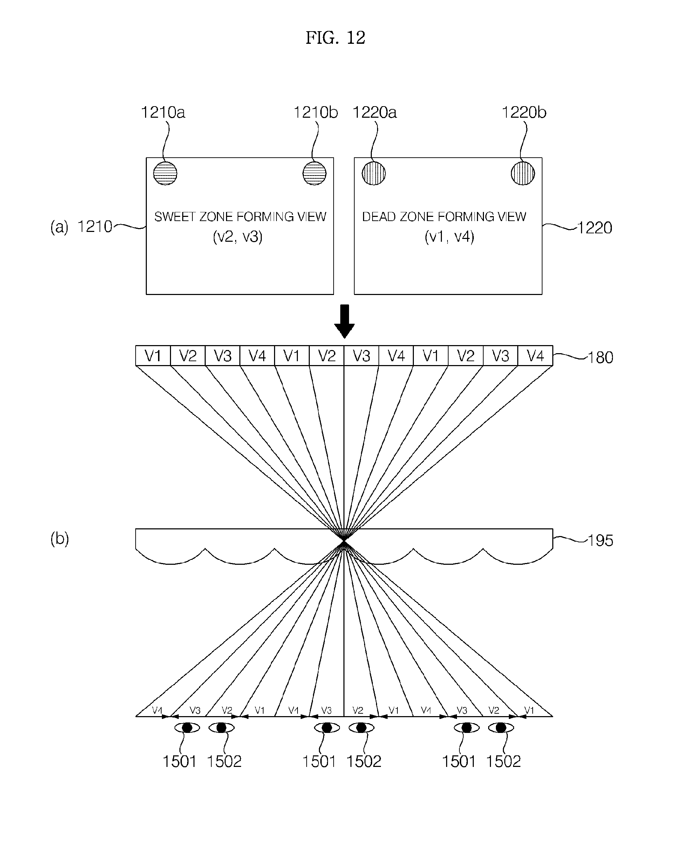

FIG. 12 illustrates that indicators 1210a and 1210b indicating a sweet zone are displayed, and indicators 1220a and 1220b indicating a dead zone are displayed.

In particular, FIG. 12 illustrates that the indicators 1210a and 1210b indicating the sweet zone are respectively inserted into the second and third view images V2 and V3 among the first to fourth view images V1 to V4, and the indicators 1220a and 1220b indicating the dead zone are respectively inserted into the first and fourth view images V1 and V4.

In this manner, a first indicator indicating a first sweet zone corresponding to the first viewing distance OVD1, a second indicator indicating a second sweet zone corresponding to the second viewing distance OVD2, a third indicator indicating a first dead zone, and a fourth indicator indicating a second dead zone may be displayed.

Various examples related to displaying of indicators related to the first and second viewing distances OVD1 and OVD2 will now be described.

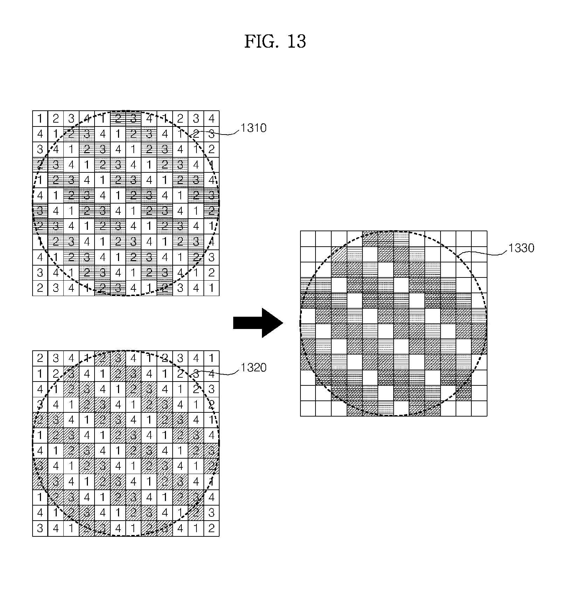

FIGS. 13 to 14C illustrate that first and second indicators indicating sweet zones corresponding to the first and second viewing distances OVD1 and OVD2 are inserted and displayed.

FIG. 13 illustrates that a first indicator 1310 indicating a sweet zone in correspondence with the first viewing distance OVD1 is inserted.

In FIG. 13, the first indicator 1310 corresponding to the first viewing distance OVD1 is inserted into each of the second and third view images V2 and V3 among the first to fourth view images V1 to V4. In addition, a second indicator 1320 corresponding to the second viewing distance OVD2 is inserted into each of the second and third view images V2 and V3.

As such, the first to fourth view images V1 to V4 may display an indicator 1330 including the first and second indicators 1310 and 1320.

In the common sweet zone 1100c illustrated in FIG. 11C, the first and second indicators 1310 and 1320 are visible together.

In the area 1100d of FIG. 11C, only the first indicator 1310 is visible and the second indicator 1320 is not visible. In the area 1100e of FIG. 11C, the first indicator 1310 is not visible and only the second indicator 1320 is visible.

As such, even when a separate indicator related to a dead zone is not displayed, the user 1500 perceives an area where the first and second indicators 1310 and 1320 are visible together, as the common sweet zone 1100c.

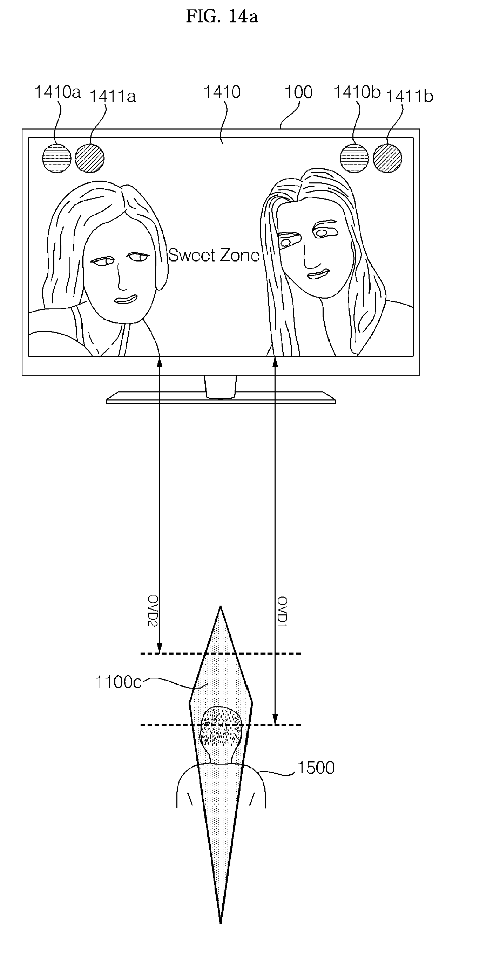

FIG. 14A illustrates that, when the user 1500 is positioned in the common sweet zone 1100c, first indicators 1410a and 1410b and second indicators 1411a and 1411b are visible while an image 1410 is being displayed on the glassless stereoscopic image display apparatus 100.

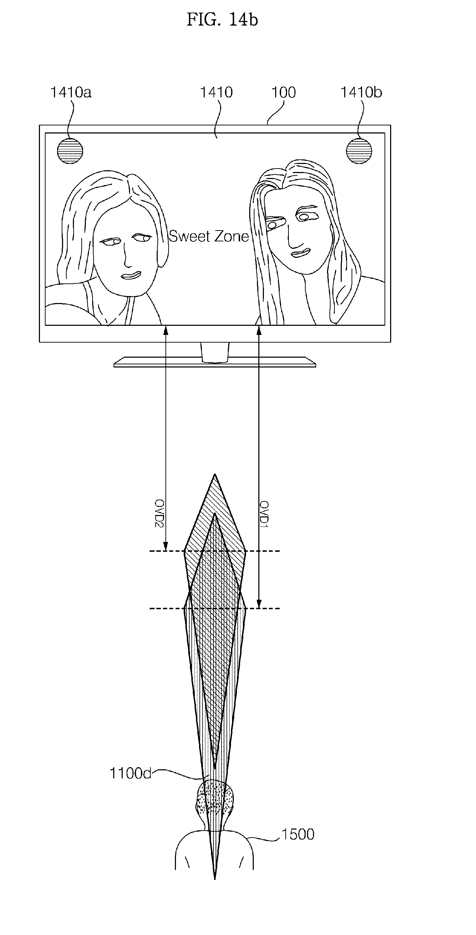

FIG. 14B illustrates that, when the user 1500 is positioned in the area 1100d related to a first sweet zone, only the first indicators 1410a and 1410b are visible while the image 1410 is being displayed on the glassless stereoscopic image display apparatus 100.

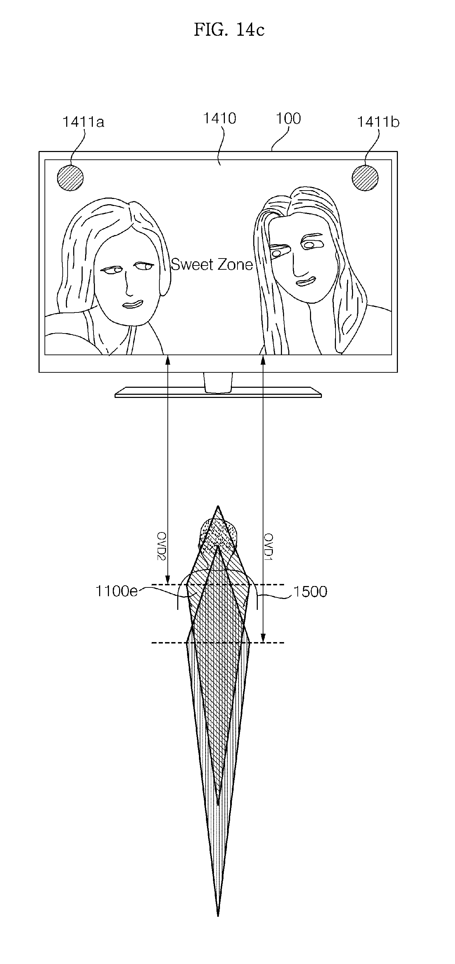

FIG. 14C illustrates that, when the user 1500 is positioned in the area 1100e related to a second sweet zone, only the second indicators 1411a and 1411 b are visible while the image 1410 is being displayed on the glassless stereoscopic image display apparatus 100.

In FIGS. 13 to 14C, the first indicator may be a green indicator and the second indicator may be a blue indicator.

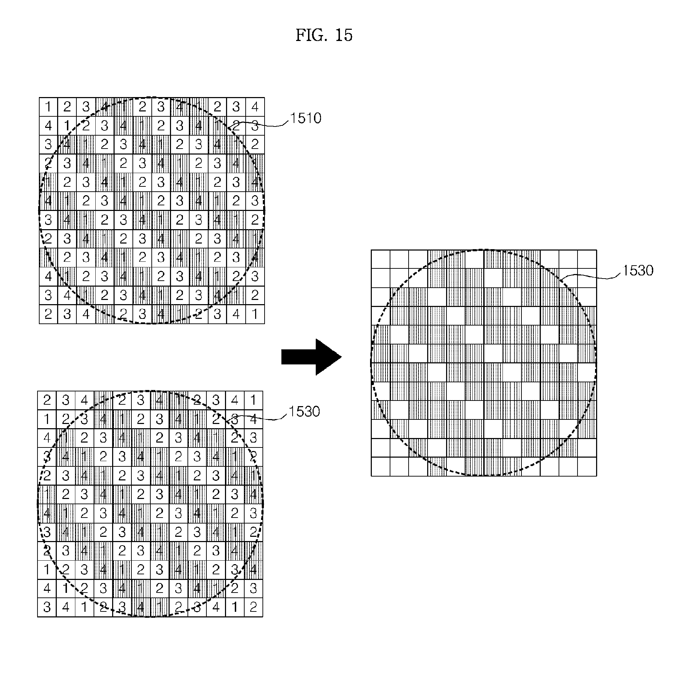

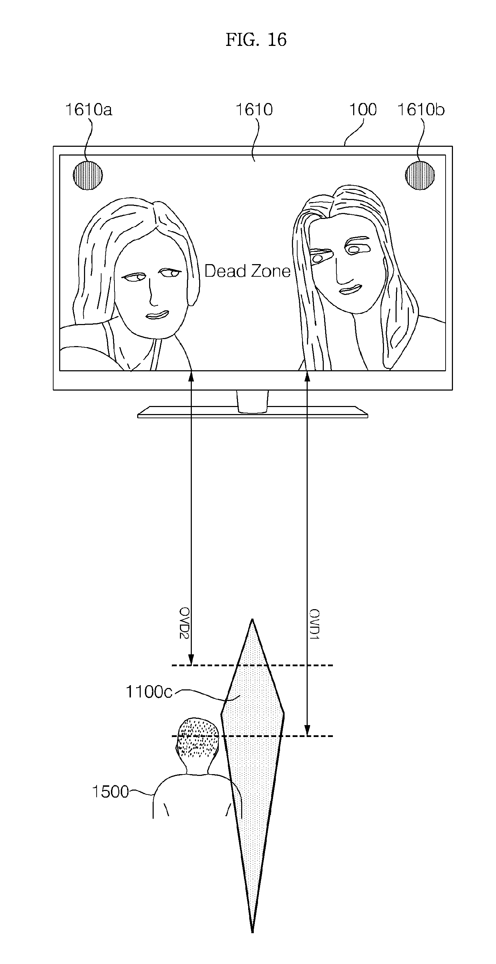

FIGS. 15 and 16 illustrate that third and fourth indicators indicating dead zones corresponding to the first and second viewing distances OVD1 and OVD2 are inserted and displayed.

FIG. 15 illustrates that a third indicator 1510 indicating a dead zone in correspondence with the first viewing distance OVD1 is inserted.

In FIG. 15, the third indicator 1510 corresponding to the first viewing distance OVD1 is inserted into each of the fourth and first view images V4 and V1 among the first to fourth view images V1 to V4. In addition, a fourth indicator 1520 corresponding to the second viewing distance OVD2 is inserted into each of the fourth and first view images V4 and V1.

As such, the first to fourth view images V1 to V4 may display an indicator 1530 including the third and fourth indicators 1510 and 1520.

In the common sweet zone 1100c illustrated in FIG. 11C, the first and second indicators 1310 and 1320 are visible together.

In an area other than the common sweet zone 1100c, the area 1100d, and the area 1100e of FIG. 11C, the third and fourth indicators 1510 and 1520 are visible together.

In the area 1100d of FIG. 11C, only the fourth indicator 1520 is visible and the third indicator 1510 is not visible. In the area 1100e of FIG. 11C, the fourth indicator 1520 is not visible and only the third indicator 1510 is visible.

As such, even when a separate indicator related to a sweet zone is not displayed, if only the third indicator 1510 or the fourth indicator 1520 is visible, the user 1500 may perceive such an area as a non-common sweet zone, i.e., an expanded dead zone.

FIG. 16 illustrates that, if the user 1500 is positioned in an area other than the common sweet zone 1100c, and more particularly, in the area 1100e of FIG. 11C, third indicators 1610a and 1610b are visible while the image 1410 is being displayed on the glassless stereoscopic image display apparatus 100. In this case, the fourth indicator is not visible.

In the area 1100d of FIG. 11C, only the fourth indicator is visible and the third indicator is not visible.

In an area other than the common sweet zone 1100c, the area 1100d, and the area 1100e of FIG. 11C, the third and fourth indicators are visible together.

In FIGS. 15 and 16, the third and fourth indicators may be the same indicator, e.g., a red indicator.

The first and second indicators indicating sweet zones in FIGS. 13 to 14C, and the third and fourth indicators indicating dead zones in FIGS. 15 and 16 may be displayed together.

As such, the user 1500 sees the first and second indicators in the common sweet zone 1100c, the first and fourth indicators in the area 1100d of FIG. 11C, the second and third indicators in the area 1100e of FIG. 11C, and the third and fourth indicators in an area other than the common sweet zone 1100c, the area 1100d, and the area 1100e.

As is apparent from the above description, in a glassless stereoscopic image display apparatus according to the present invention, by inserting and displaying a first indicator and a second indicator respectively corresponding to a first viewing distance and a second viewing distance of a user, even when the user is positioned in a central area with respect to the glassless stereoscopic image display apparatus, the user may perceive an accurate sweet zone area in consideration of the distance between the user and the glassless stereoscopic image display apparatus. That is, the user may be prevented from being positioned in a dead zone generated due to a view reversal phenomenon. Eventually, user convenience may be improved.

In particular, by individually displaying the first indicator related to a sweet zone corresponding to the first viewing distance of the user, and the second indicator related to a sweet zone corresponding to the second viewing distance of the user, a common sweet zone may be accurately perceived.

In addition, by displaying an indicator related to a dead zone corresponding to the first viewing distance of the user, and an indicator related to a dead zone corresponding to the second viewing distance of the user, an area other than the common sweet zone may be accurately perceived as an expanded dead zone. Eventually, the user may instinctively and easily perceive the expanded dead zone area and the common sweet zone.

As described above, in a glassless stereoscopic image display apparatus incapable of using a user head tracking scheme, by displaying indicators respectively corresponding to a plurality of viewing distances, an appropriate viewing distance may be guided.

A glassless stereoscopic image display apparatus and a method for operating the same according to the present invention are not restricted to the exemplary embodiments set forth herein. Therefore, variations and combinations of the exemplary embodiments may fall within the scope of the present invention.

A method for operating a glassless stereoscopic image display apparatus according to the present invention can also be embodied as processor-readable code on a processor-readable recording medium. The processor-readable recording medium is any data memory device that can store data which can thereafter be read by a processor included in the glassless stereoscopic image display apparatus. Examples of the processor-readable recording medium include read-only memory (ROM), random-access memory (RAM), CD-ROMs, magnetic tapes, floppy disks, and optical data memory devices. The processor-readable recording medium can also be distributed over network coupled computer systems so that the processor-readable code is stored and executed in a distributed fashion.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A glassless stereoscopic image display apparatus comprising:
a display (180);
a lens unit (195) disposed in front of the display to separate multi-view images to be displayed on the display according to direction; and
a controller (170) configured to insert a first indicator indicating a sweet zone corresponding to a first viewing distance into a part of the multi-view images, insert a second indicator indicating a sweet zone corresponding to a second viewing distance into another part of the multi-view images, and control the display to display the multi-view images, into which the first and second indicators are inserted, on the display.

2. The glassless stereoscopic image display apparatus according to claim 1, wherein the first and second indicators are different from each other in at least one of brightness, color, and shape.

3. The glassless stereoscopic image display apparatus according to claim 1, wherein the first and second indicators are different from the multi-view images in at least one of brightness, color, and shape.

4. The glassless stereoscopic image display apparatus according to claim 1, wherein the first and second indicators are visible in an area other than a common sweet zone between the sweet zone corresponding to the first viewing distance and the sweet zone corresponding to the second viewing distance.

5. The glassless stereoscopic image display apparatus according to claim 1, wherein the controller (170)
inserts a third indicator indicating a dead zone corresponding to the first viewing distance into a part of the multi-view images, inserts a fourth indicator indicating a dead zone corresponding to the second viewing distance into another part of the multi-view images, and controls the display to display the multi-view images, into which the first to fourth indicators are inserted, on the display.

6. The glassless stereoscopic image display apparatus according to claim 5, wherein the third and fourth indicators are the same in at least one of brightness, color, and shape.

7. The glassless stereoscopic image display apparatus according to claim 5, wherein the third indicator is visible in the dead zone corresponding to the first viewing distance and the fourth indicator is visible in the dead zone corresponding to the second viewing distance.

8. A method for operating a glassless stereoscopic image display apparatus, the method comprising:
Receiving (S1010) multi-view images;
inserting (S1020)a first indicator indicating a sweet zone corresponding to a first viewing distance into a part of the multi-view images;
inserting (S1030)a second indicator indicating a sweet zone corresponding to a second viewing distance into another part of the multi-view images; and
displaying (S1040)the multi-view images, into which the first and second indicators are inserted, on a display.

9. The method according to claim 8, wherein the first and second indicators are different from each other in at least one of brightness, color, and shape.

10. The method according to claim 8, wherein the first and second indicators are different from the multi-view images in at least one of brightness, color, and shape.

11. The method according to claim 8, wherein the first and second indicators are visible in an area other than a common sweet zone between the sweet zone corresponding to the first viewing distance and the sweet zone corresponding to the second viewing distance.

12. The method according to claim 8, further comprising:
inserting a third indicator indicating a dead zone corresponding to the first viewing distance into a part of the multi-view images; and
inserting a fourth indicator indicating a dead zone corresponding to the second viewing distance into another part of the multi-view images,
wherein the displaying of the multi-view images comprises displaying the multi-view images, into which the first to fourth indicators are inserted.

13. The method according to claim 12, wherein the third and fourth indicators are the same in at least one of brightness, color, and shape.

14. The method according to claim 12, wherein the third indicator is visible in the dead zone corresponding to the first viewing distance and the fourth indicator is visible in the dead zone corresponding to the second viewing distance.
